Europäisches Patentamt

European Patent Office

Office européen des brevets

(19)

(11) **EP 0 857 641 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(51) Int Cl.⁷: **B62D 11/18**

(21) Anmeldenummer: **98101123.2**

(22) Anmeldetag: **23.01.1998**

(54) **Lenksteuersystem für Raupenfahrzeuge**

Steering control for tracked vehicles

Commande de direction pour véhicules à chenilles

(84) Benannte Vertragsstaaten:
**DE FR GB IT**

(30) Priorität: **05.02.1997 US 795091**

(43) Veröffentlichungstag der Anmeldung:
**12.08.1998 Patentblatt 1998/33**

(73) Patentinhaber: **DEERE & COMPANY**
**Moline, Illinois 61265-8098 (US)**

(72) Erfinder: **Straetker, John George**
**Waterloo, Iowa 50701 (US)**

(74) Vertreter: **Magin, Ludwig Bernhard et al**
**Deere & Company**
**European Office**
**Patent Department**
**68140 Mannheim (DE)**

(56) Entgegenhaltungen:
**US-A- 4 519 275     US-A- 4 914 592**

**Beschreibung**

Die Erfindung betrifft ein Lenksteuersystem für ein Raupenfahrzeug mit einem durch eine Bedienungsperson bedienbaren Lenkelement für eine linke und eine rechte Raupenlaufbahn, welche durch einen differentiellen Antriebsmechanismus in Abhängigkeit eines Steuersignals angetrieben werden, gemäß dem Oberbegriff des Patentanspruchs 1.

Raupenfahrzeuge werden dadurch gelenkt, daß die eine Raupenlaufbahn schneller angetrieben wird als die andere. Bei einigen Raupenfahrzeugen wird dies durch ein differentielles Lenksystem erreicht, welches eine durch den Fahrantriebsmotor angetriebene hydraulische Verstellpumpe enthält, die ihrerseits einen hydraulischen Konstantmotor antreibt (US-A-5,390,751). Üblicherweise werden derartige Raupenfahrzeuge durch einfaches Verstellen des Winkels der Schrägscheibe unmittelbar in Abhängigkeit eines Steuerbefehls gelenkt. Ein solches System weist bei geringen Fahrzeuggeschwindigkeiten ein aggressives Lenkverhalten auf, was die Fähigkeit der Bedienungsperson, das Fahrzeug bei genauen Lenkanforderungen zu steuern, vermindert. Desweiteren bieten solche Systeme nicht die Flexibilität, um die Wirksamkeit oder die funktionelle Charakteristik des Systems zu verändern.

Die US-A-4,519,275 beschreibt eine Lenkungs-Steuervorrichtung für ein Fahrzeug mit hydromechanischem Fahrzeuggetriebe, welches ein mechanisches Getriebe mit mehreren Kupplungen zur Auswahl von Geschwindigkeitsbereichen und zwei angetriebene Ausgangswellen aufweist. Das mechanische Getriebe treibt zwei Hydraulikmotor an, welche ihrerseits je eine Hydraulikpumpe antreiben, die mit dem mechanischen Getriebe in Wirkverbindung stehen, um die Drehzahl der Ausgangswellen zu modifizieren. Die Lenkungs-Steuervorrichtung umfasst einen Verbrennungsmotor-Drehzahlsensor zur Abtastung einer Ist-Drehzahl der Antriebsmaschine, zwei Hydraulikmotor-Drehzahlsensoren zur Erfassung der Ist-Drehzahlen der beiden Hydraulikmotoren, vier Flüssigkeitsdrucksensoren, zur Erfassung des aktuellen Geschwindigkeitsbereichs des mechanischen Getriebes, und eine Recheneinheit, die aus den Signalen der genannten Sensoren eine Fahrzeuggeschwindigkeit berechnet. Die Lenkungssteuervorrichtung umfasst des Weiteren einen Lenkwinkel-Sensor, zur Erfassung des Lenkradeinschlags und eine arithmetische Recheneinheit mit einem Speicher, in dem zu verschiedenen Lenkwinkeln gehörige optimale Kurvenradien abgelegt sind. Die Recheneinheit errechnet aus den Sensorsignalen den Momentanwert des Kurvenradius, vergleicht diesen mit dem optimalen Radius, der dem aktuellen Lenkwinkel entspricht, und erzeugt ein Lenksignal, welches zur Steuerung der Hydraulikpumpen herangezogen wird, so dass sich in Abhängigkeit vom Lenkwinkel und der errechneten Fahrzeuggeschwindigkeit ein optimaler Kurvenradius ergibt. Dabei wird bei niedriger Fahrzeuggeschwindigkeit der Kurvenradius unabhängig von der Fahrzeuggeschwindigkeit festgelegt, während bei hohen Fahrzeuggeschwindigkeiten die Zentripedal-Beschleunigung in Bezug auf den Lenkwinkel konstant gehalten wird. Nachteilig hierbei ist der Einsatz relativ vieler Sensoren. Bewegt sich das Fahrzeug im Leerlauf weiter, ohne dass ein Gang eingelegt ist, lässt sich keine Fahrzeuggeschwindigkeit messen, so dass die Steuerung entsprechend eingeschränkt ist.

Die der Erfindung zugrunde liegende Aufgabe wird darin gesehen, ein gattungsgemäßes Lenksteuersystem für Raupenfahrzeuge anzugeben, durch das die Befähigung der Bedienungsperson, das Fahrzeug sowohl bei geringen als auch bei hohen Fahrgeschwindigkeiten zu steuern, verbessert wird. Desweiteren soll das Lenksteuersystem so funktionieren, daß die Lenkradposition für Fahrzeuggeschwindigkeiten innerhalb eines bestimmten Bereichs ungefähr proportional zu der Wendekurve (die umgekehrt proportional zu dem Wenderadius ist) ist. Desweiteren soll das Lenksteuersystem so ausgebildet sein, daß die Lenkung bei höheren Transportgeschwindigkeiten weniger aggressiv wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäßen Lenksteuersystem findet bevorzugt bei einem Raupenfahrzeug mit einem differentiellen Lenksystem Anwendung, bei dem eine hydraulische Verstellpumpe und ein hydraulischer Konstantmotor mit elektromechanischen Verbindungselementen verwendet wird. Das erfindungsgemäße Lenksteuersystem erfaßt elektrisch die Lenkradposition, die Fahrzeuggeschwindigkeit, die Antriebsmotordrehzahl und die Vorwärts/Rückwärts-Richtung des Fahrzeugs. Aus diesen erfaßten elektrischen Eingangsgrößen wird ein Steuersignal gebildet, welches zur Steuerung des Schrägscheibenwinkels der hydraulischen Verstellpumpe herangezogen wird, die ihrerseits einen hydraulischen Lenkmotor antreibt, der einen differentiellen Antriebsmechanismus der Raupenlaufbahnen antreibt. Der Lenkmotor erhöht die Rotation einer Laufbahn und vermindert die Rotation der anderen Laufbahn. Dies läßt sich durch Verwendung einer Querwelle erreichen unter Verwendung eines unmittelbaren Zahneingriffs mit einem Planetengetriebe auf der einen Seite des Fahrzeugs und eines die Drehrichtung umkehrenden Zahneingriffs mit einem Planetengetriebe auf der anderen Seite des Fahrzeugs.

Eine bevorzugte Ausbildung des erfindungsgemäßen Lenksteuersystems wirkt so, daß für Fahrzeuggeschwindigkeiten zwischen 2 und 14 Kilometern pro Stunde (kph) bei Nenndrehzahl des Antriebsmotors die Lenkradposition ungefähr proportional der Wendekurve (invers zum Wenderadius) ist. Oberhalb dieser Fahrzeuggeschwindigkeit wird die Lenkung für Transportgeschwindigkeiten weniger aggressiv. Dies ermöglicht der Bedienungsperson eine verbesserte Einstellung sowohl bei geringeren als auch bei höheren Übersetzungen. Eine Änderung der Antriebsmotordrehzahl verändert nicht den von der Bedienungsperson vorgegebenen Wenderadius. Wenn die Fahrzeuggeschwin-

EP 0 857 641 B1

digkeit gegen Null vermindert wird, nimmt auch die Winkelgeschwindigkeit des Wendevorgangs ab. Wenn das Kupplungspedal bei eingelegtem Gang betätigt wird, oder wenn der Gangschalthebel in seine Neutralstellung bewegt wird, rollt das Fahrzug bis zum Stillstand aus. Dies ermöglicht der Bedienungsperson beim Anhalten und Anfahren des Fahrzeugs eine bessere Einstellung der Wendevorgaben.

Das erfindungsgemäße Lenksteuersystem vereint die Vorteile eines Lenksystems für ein Raupenfahrzeug mit den Vorteilen des Lenksystems für ein Radfahrzeug. Es läßt sich leicht anpassen, um die Fahrfähigkeit und Steuerbarkeit für unterschiedliche Anwendungen zu optimieren. Das erfindungsgemäße Lenksteuersystem stellt eine Steuerung bereit, die einerseits bei Feldarbeiten ähnlich der eines Breitspurtraktors ist, und andererseits die Fähigkeit gegensinniger Drehung bei Geschwindigkeiten nahe Null ermöglicht. Vorzugsweise weist das Lenkrad feste Anschläge auf, zwischen denen ein Drehwinkel von ungefähr 600 Grad möglich ist. Desweiteren weist das Lenkrad vorzugsweise eine Selbstzentrierung mit einer wahrnehmbaren Mittelstellung, in die das Lenkrad selbsttätig zurückkehrt, auf. Zum Lenken sind nur geringe Anstrengungen erforderlich.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1    das vereinfachte, schematische Diagramm des Antriebs eines Raupenfahrzeugs mit einem erfindungsgemäßen Lenksteuersystem,

Fig. 2    das logische Flußdiagramm eines Hauptschleifenalgorithmus, der durch einen Mikroprozessor des in Fig. 1 dargestellten Lenksteuersystems ausgeführt wird und

Fig. 3    das logische Flußdiagramm eines Rechenalgorithmus für das Lenksteuersignal, welches durch den Hauptschleifenalgorithmus der Fig. 2 aufgerufen wird.

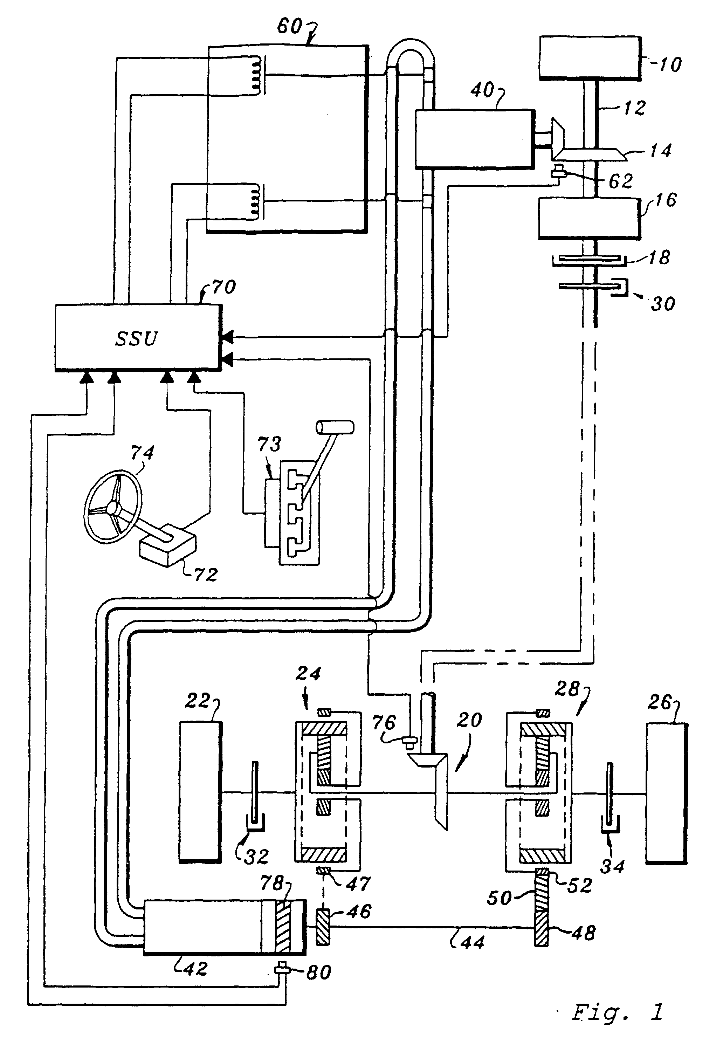

Aus Fig. 1 geht der Antriebsstrang eines Raupenfahrzeugs hervor, welcher einen Antriebsmotor 10 mit einer Ausgangswelle 12 aufweist, die ein rechtwinkliges Kegelrad 14 und ein Getriebe 16 antreibt. Das Getriebe 16 treibt eine Kupplung 18 an, die ihrerseits über ein rechtwinkliges Kegelradgetriebe 20 sowie einerseits über ein linkes Lenkplanetengetriebe 24 ein linkes Laufbahnantriebsrad 22 sowie andererseits über ein rechtes Lenkplanetengetriebe 28 ein rechtes Laufbahnantriebsrad 26 antreibt. Die Lenkplanetengetriebe 24 und 28 sind vorzugsweise wie die in der US-A-5,390,751 beschriebenen ausgebildet. Zusätzlich sind nicht dargestellte außenliegende Planetengetriebe zwischen den Lenkplanetengetrieben und dem zugehörigen Laufbahnantriebsrad 22, 26 angeordnet, wie sie bei den John Deere Traktoren der Serie 8000 vorgesehen sind. Diese sind hier jedoch nicht näher beschrieben, weil sie nicht in die Lenksteuerfunktion der vorliegenden Erfindung einbezogen sind. Eine Parkbremse 30 steht mit der Welle 18 in Verbindung. Linke und rechte Betriebsbremsen 32, 34 sind mit dem linken bzw. dem rechten Laufbahnantriebsrad 22, 26 gekoppelt.

Das rechtwinklige Kegelrad 14 treibt eine hydraulische Lenkverstellpumpe 40, beispielsweise eine 75 cc Pumpe der Serie 90 von der Firma Sauer-Sundstrand, an. Die Lenkverstellpumpe 40 versorgt ihrerseits einen hydraulischen Lenkkonstantmotor 42, beispielsweise einen 75 cc Motor der Serie 90 ebenfalls von der Firma Sauer-Sundstrand. Der Lenkmotor 42 treibt über eine Querwelle 44 und ein Zahnrad 46, ein Ringrad 47 des linken Lenkplanetengetriebes 24 sowie über die Querwelle 44, ein Zahnrad 48 und ein Umkehrzahnrad 50 ein Ringrad 52 des rechten Lenkplanetengetriebes 28 an.

Die nicht gezeigte Schrägscheibe der Lenkpumpe 40 wird durch ein Drucksteuerventil oder eine elektronische Verstellsteuerung (EDC) 60 gesteuert. Die EDC 60 ist vorzugsweise eine bekannte Zweistufenvorrichtung mit einer ersten Stufe, welche ein Klappenrückschlagventil enthält, und mit einer zweiten Stufe, welche eine Druckerhöhungsstufe für die Lenkverstellpumpe 40 enthält, wie beispielsweise eine von der Firma Sauer-Sundstrand käuflich erhältliche Pumpe, deren Steuerschieber geringfügig für kaltes Wetter verändert wurde und die keine manuelle Übersteuerungsfunktion aufweist.

Ein Drehzahlsensor 62, wie beispielsweise ein käuflich erhältlicher magnetischer Aufnehmer, der in der Nähe des rechtwinkligen Kegelrads 14 befestigt ist, liefert ein elektrisches Antriebsmotordrehzahlsignal an eine elektrische Lenksystemsteuereinheit (SSU) 70. Die Magnetspulen des Drucksteuerventils 60 werden durch Pumpensollwertsignale (pump_cmd), die durch die SSU 70 erzeugt werden, gesteuert.

Ein Lenkraddrehpositionwandler 72, wie beispielsweise ein Drehpotentiometer, liefert an die SSU 70 ein elektrisches Lenkwinkelsignal (steer_angle), das die Lage relativ zu einer zentrierten Position eines federzentrierten, durch eine Bedienungsperson betätigbaren Lenkrades 74, welches sich vorzugsweise durch einen Winkelbereich von 600 Grad verdrehen läßt, repräsentiert. Zum Zwecke der Redundanz und Zuverlässigkeit enthält der Lenkraddrehpositionwandler 72 vorzugsweise drei nicht näher dargestellte Drehpotentiometer, von denen sich gemäß eines Unterprogramms der SSU 70 ein einziges Winkelsignal, steer_angle, ableiten läßt.

Ein Antriebsstrangdrehzahlsensor 76, vorzugsweise ein differentieller Halleffektdrehzahlsensor, wie er beispielsweise bei von John Deere hergestellten Traktoren verwendet wird, ist in der Nähe des Endantriebs 20 angeordnet und liefert an die SSU 70 ein elektrisches Endantriebsdrehzahl-, ein Fahrzeuggeschwindigkeits- oder ein Raddrehzahlsignal (whl_spd). Ein Magnetring 78 ist drehbar am Lenkmotor 42 montiert, und ein Halleffektwandler 80, der nahe des Magnetrings 78 befestigt ist, liefert an die SSU 70 ein elektrisches Lenkmotordrehzahlsignal und ein elektrisches Lenkmotorrichtungssignal.

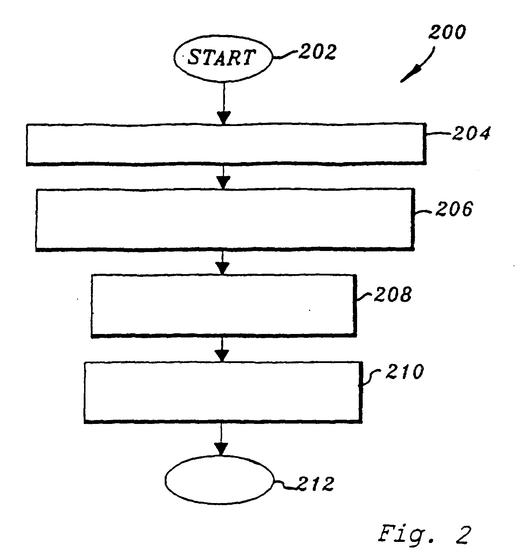

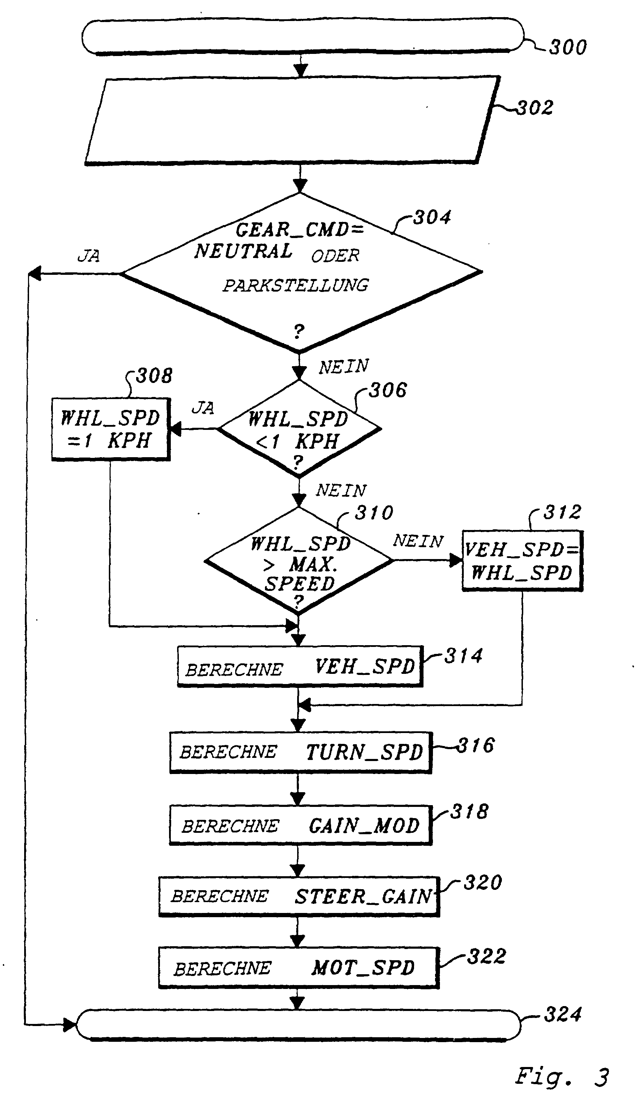

Die SSU 70 enthält einen nicht dargestellten, käuflich verfügbaren Mikroprozessor, der einen Hauptschleifenalgorithmus 200 ausführt, deren Lenksteueraspekte anhand der Fig. 2 erläutert werden. Die Hauptschleife beginnt mit Schritt 202. In Schritt 204 werden verschiedene vorgegebenen Parameter und Konstanten aus einem Speicher eingelesen oder wiederbeschafft. Diese im Speicher enthaltenen Parameter und Konstanten sind vorgegeben und lassen sich in Abhängigkeit besonderer Anwendungen variieren. In Schritt 206 wird die Antriebsstrangdrehzahl des Drehzahlsensors 76 ermittelt. Desweiteren wird in Schritt 206 ein Fahrtrichtungssignal (vorwärts/rückwärts), veh_dir, ermittelt. Das Fahrtrichtungssignal veh_dir ist +1, wenn sich das Fahrzeug vorwärts bewegt, oder -1, wenn sich das Fahrzeug rückwärts bewegt. Das veh_dir Signal kann durch ein Unterprogramm von Signalen des Antriebsstrangs oder des Antriebsstrangdrehzahlsensors 76, von einem Getriebeschalthebelwandler 73, wie er beispielsweise durch die US-A-5,406,860 bekannt geworden ist, von einem nicht dargestellten Kupplungseingriffsschalter und/oder von einem Gangsollwertsignal einer nicht dargestellten Lastschaltgetriebesteuereinheit abgeleitet werden. Alternativ hierzu kann das veh_dir Signal auch durch einen nicht dargestellten Radaroder Ultraschallfahrzeuggeschwindigkeitssensor zur Verfügung gestellt werden. Schritt 208 bestimmt das Lenksteuersignal, indem das anhand Fig. 3 beschriebene Unterprogramm aufgerufen wird. Schritt 110 erzeugt ein Magnetspulensteuersignal, welches an das Drucksteuerventil oder die elektronische Verstellsteuerung (EDC) 60 angelegt wird. Die Hauptschleife endet mit Schritt 212 und wird zyklisch zum Anfangsschritt 202 zurückgeführt.

Das Lenksteuersignal wird durch das in Fig. 3 gezeigte Unterprogramm gebildet, welches mit Schritt 300 beginnt, der von der Hauptalgorithmusschleife aufgerufen wird. Schritt 302 gewinnt Eingangsdaten für den Lenkwinkel (steer_angle), die Fahrzeuggeschwindigkeit (whl_spd), welche beispielsweise aus dem Antriebsstrangdrehzahlsignal abgeleitet werden kann, die Antriebsmotordrehzahl (eng_spd) und die Fahrzeugrichtung (veh_dir).

Wenn das vorgegebene Gangsignal des Wandlers 73 anzeigt, daß sich der Gangschalthebel (gear_cmd) in seiner Neutralstellung oder in Parkstellung befindet und sich das Fahrzeug nicht bewegt, richtet Schritt 304 den Algorithmus auf Schritt 324, welcher die Steuerung auf die Hauptschleife zurückführt. Andernfalls schreitet der Algorithmus von Schritt 304 zu Schritt 306 weiter.

Wenn der whl_spd Wert des Drehzahlsensors 76 kleiner als 1 kph (Kilometer pro Stunde) ist, richtet Schritt 306 den Algorithmus auf Schritt 308, welcher den Raddrehzahlwert, whl_spd, gleich 1 kph einstellt und den Algorithmus auf Schritt 314 richtet, andernfalls schreitet der Algorithmus von Schritt 306 zu Schritt 310 weiter. Wenn der durch den Drehzahlsensor 76 ermittelte whl_spd Wert nicht größer als eine maximale Drehzahl (von beispielsweise 16 kph) ist, richtet Schritt 310 den Algorithmus auf Schritt 312, welcher einen Fahrzeuggeschwindigkeitsrechenwert, veh_spd gleich dem whl_spd setzt und den Algorithmus auf Schritt 316 richtet. Andernfalls schreitet der Algorithmus von Schritt 310 zu Schritt 314 weiter.

Schritt 314 berechnet einen theoretischen Fahrzeuggeschwindigkeitswert, veh_spd anhand folgender Gleichung:

$$veh\_spd = max\_veh\_spd + (whl\_spd - max\_veh\_spd)/K2,$$

wobei max_veh_spd ein vorwählbarer Parameter, wie beispielsweise 16 kmh, ist, welcher in Abhängigkeit von dem Anwendungsfall variierbar ist, whl_spd der Drehzahlwert des Drehzahlsensors 76 ist und K2 eine vorwählbare Konstante ist.

Schritt 316 berechnet einen Wendegeschwindigkeitswert, turn_spd, anhand folgender Gleichung:

$$turn\_spd = (veh\_spd + offset) \times (nom\_eng\_spd/eng\_spd) + adder,$$

wobei turn_spd eine Wendegeschwindigkeits-Skalierungsvariable ist, veh_spd der Wert aus Schritt 312 oder Schritt 314 ist, offset eine Konstante ist, nom_eng_spd eine Antriebsmotornenndrehzahl-Skalierungskonstante ist, eng_spd die Antriebsmotordrehzahl des Sensors 62 ist und adder eine weitere Konstante ist.

Schritt 318 berechnet einen Verstärkungs-Modifikationswert, gain_mod gemäß folgender Gleichung:

$$gain\_mod = K1 \times (turn\_spd / turn\_spd\_div),$$

wobei K1 eine Konstante ist, turn_spd der Wert aus Schritt 316 ist und turn_spd_div eine Skalierungskonstante ist.

Schritt 320 berechnet einen Lenkverstärkungswert, steer_gain, welcher ein modifizierter Lenkwinkel- oder Lenkradpositionswert ist, anhand folgender Gleichung:

$$steer\_gain = ([a \times steer\_angle + (1 - a) \times steer\_angle^2] \times$$

$$gain\_mod) / 2048,$$

wobei a eine vorwählbare Konstante ist, steer_angle das von dem Wandler 72 abgeleitete Lenkwinkelsignal ist und gain-mod der Wert aus Schritt 318 ist.

Schritt 322 berechnet einen Lenkmotorstellwert, mot_spd gemäß folgender Gleichung:

$$mot\_spd = [(steer\_gain) \times (max\_mot\_spd / 2048)] \times veh\_dir,$$

wobei steer_gain der Wert aus Schritt 320 ist, max_mot_spd ein vorwählbarer maximaler Lenkmotordrehzahlwert ist und veh_dir der Fahrzeugrichtungswert ist, welcher +1 ist, wenn das Fahrzeug sich vorwärts bewegt, und -1 ist, wenn das Fahrzeug sich rückwärts bewegt.

Schließlich veranlaßt Schritt 324 die Steuerung zu der Hauptschleife zurückzukehren, welche das Lenksteuersignal an die Lenkpumpensteuereinheit 60 ausgibt. Das Ergebnis der Schritte 314-322 ist darin zu sehen, daß das Lenksteuersignal eine Funktion von dem Fahrzeuggeschwindigkeitssignal (veh_spd), dem Antriebsmotordrehzahlsignal (eng_spd) und dem Lenksignal (steer_angle) ist. Infolge des Schrittes 316 ist der Wendegeschwindigkeitswert proportional zu der Fahrzeuggeschwindigkeit multipliziert mit einem Verhältnis aus Antriebsmotornenndrehzahl geteilt durch die erfaßte Antriebsmotordrehzahl. Infolge des Schrittes 318 ist das Lenksteuersignal proportional zu einem Verstärkungswert multipliziert mit einem Verhältnis aus dem Wendegeschwindigkeitswert geteilt durch einen vorwählbaren Wendegeschwindigkeitdivisorwert. Infolge des Schrittes 320 ist das Lenksteuersignal proportional zum Quadrat des Lenkwinkelsignals (steer_angle).

Die verschiedenen vorwählbaren Parameter und Konstanten können in Abhängigkeit des jeweiligen Anwendungsfalls variiert werden. Beispielsweise können die verschiedenen Konstanten und Parameter eingestellt werden, um die Geschwindigkeit zu modifizieren, mit der sich die Wendekurve (umgekehrt proportional zum Wenderadius) als Funktion der Gesamtfahrzeuggeschwindigkeit bei konstanter Antriebsmotordrehzahl ändert. Innerhalb eines bestimmten Bereichs der Fahrzeuggeschwindigkeit ist die Wendekurve ungefähr proportional zu der Position, die das Lenkrad relativ zu seiner zentrierten Lage einnimmt. Dieser Bereich läßt sich einstellen durch Variation der minimalen und maximalen Werte, auf die in den Schritten 306 und 310 Bezug genommen wird, und durch Variation des offset-Wertes und des adder-Wertes in Schritt 316.

Die Wendekurve ist zwischen den Fahrzeuggeschwindigkeiten 2 kph und 14 kph ungefähr proportional zu der Position, die das Lenkrad relativ zu seiner zentrierten Lage einnimmt. Oberhalb dieses Bereiches wird die Lenkung für Transportgeschwindigkeiten selbsttätig weniger aggressiv. Unterhalb dieses Bereichs wird die Lenkung zur Befähigung des Gegenlaufs der Raupenlaufbahnen selbsttätig aggressiver. Dies gewährleistet, daß die Bedienungsperson eine bessere Kontrolle über den gesamten Antriebsbereich hat. Desweiteren lassen sich die minimalen und maximalen Antriebsstrangdrehzahlwerte oder Fahrzeuggeschwindigkeitswerte so einstellen, daß sich der Fahrzeuggeschwindigkeitsbereich, innerhalb dessen eine bestimmte Lenkradposition ungefähr einen bestimmten Lenkradius zur Folge hat, aufweiten oder einengen.

Eine Änderung der Antriebsmotordrehzahl verändert nicht den von der Bedienungsperson vorgegebenen Wenderadius. Mit abnehmender Traktorgeschwindigkeit gegen Null, vermindert sich auch die Wendegeschwindigkeit des Traktors. Wird das Kupplungspedal bei eingelegtem Gang betätigt oder wird der Gangschalthebel in seine Neutralstellung bewegt, so läuft der Traktor bis zum Stillstand aus. In diesem Fall verlangsamt sich das Wenden hört aber nicht auf. Dies gibt der Bedienungsperson eine bessere Kontrolle über den von ihr geforderten Wendevorgang beim Anhalten und Anfahren des Fahrzeugs.

Das Lenk- oder Pumpensteuersignal kann als Führungsgröße in einem Steueralgorithmus mit geschlossener Schleife unter Verwendung des vom Halleffektsensor 80 erfaßten als Rückkopplungssignal dienenden Motordrehzahlsignals verwendet werden. Das Lenk- oder Pumpensteuersignal kann auch als Führungsgröße in einem offenen Regelkreis verwendet werden. Das Lenk- oder Pumpensteuersignal kann modifiziert, annähernd skaliert und an ein nicht gezeigtes Ausgangstreiberprogramm gesendet werden. Die Software der SSU 70 und der Ausgangstreiber geben den geforderten Strompegel an die EDC 60 aus. Die EDC 60 steuert den Schrägscheibenwinkel der Lenkverstellpümpe 40, die ihrerseits die Geschwindigkeit des Lenkmotors 42 und schließlich die Differenzgeschwindigkeit zwischen den beiden Laufbahnantrieben 24 und 28 steuert.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

**Patentansprüche**

1.  Lenksteuersystem für ein Raupenfahrzeug mit einem durch eine Bedienungsperson bedienbaren Lenkelement (74) für eine linke und eine rechte Raupenlaufbahn, welche durch einen differentiellen Antriebsmechanismus (24, 28) in Abhängigkeit eines Steuersignals angetrieben werden, und mit einem an das Lenkelement (74) gekoppelten Lenksensor (72) zur Erzeugung eines Lenksignals, welches die Lage des Lenkelements (74) repräsentiert, **gekennzeichnet durch** einen Fahrzeuggeschwindigkeitssensor (76) zur unmittelbaren Erfassung der Fahrzeuggeschwindigkeit und zur Erzeugung eines Fahrzeuggeschwindigkeitssignals und **durch** eine Steuereinheit (70) zur Erzeugung des Steuersignals in Abhängigkeit des Fahrzeuggeschwindigkeitssignals und des Lenksignals.

2.  Lenksteuersystem nach Anspruch 1, **dadurch gekennzeichnet, daß** ein Antriebsmotordrehzahlsensor (62) zur Erzeugung eines Antriebsmotordrehzahlsignals vorgesehen ist und daß die Erzeugung des Steuersignals auch in Abhängigkeit des Antriebsmotordrehzahlsignals erfolgt.

3.  Lenksteuersystem nach Anspruch 1 oder 2, **dadurch gekennzeichnet, daß** die Steuereinheit (70) Mittel enthält, die bei einer gegebenen Position des Lenkelements (74) ansprechen, um Steuersignale zu erzeugen, so daß eine Wendekurve des Fahrzeugs konstant bleibt, sofern sich die Fahrzeuggeschwindigkeit innerhalb eines vorgebbaren Bereichs ändert, und die Wendekurve oberhalb einer bestimmten Fahrzeuggeschwindigkeit mit zunehmender Fahrzeuggeschwindigkeit abnimmt, wobei die Wendekurve umgekehrt proportional zu einem Wenderadius ist.

4.  Lenksteuersystem nach Anspruch 2 oder 3, **dadurch gekennzeichnet, daß** die Steuereinheit Mittel zur Berechnung eines Wendegeschwindigkeitswertes, der proportional ist zu der Fahrzeuggeschwindigkeit multipliziert mit einem Verhältnis aus der Nenndrehzahl des Antriebssmotors geteilt durch die erfaßte Antriebsmotordrehzahl, sowie Mittel zur Berechnung des Steuersignals enthält, das proportional ist zu einem Lenkverstärkungswert multipliziert mit einem Verhältnis aus dem Wendegeschwindigkeitswert geteilt durch einen voreinstellbaren Wendegeschwindigkeitsdivisorwert.

5.  Lenksteuersystem nach einem der Ansprüche 1 bis 4, **dadurch gekennzeichnet, daß** Mittel zur Bestimmung, ob das Fahrzeug vorwärts oder rückwärts fährt, vorgesehen sind, die ein entsprechendes Fahrtrichtungssignal erzeugen, und daß die Steuereinrichtung das Steuersignal als Funktion des Lenksignals, des Fahrgeschwindigkeitssignals, gegebenenfalls des Antriebsmotordrehzahlsignals und des Fahrtrichtungssignals erzeugt.

6.  Lenksteuersystem nach einem der Ansprüche 1 bis 5, **dadurch gekennzeichnet, daß** das Steuersignal wenigstens eine Komponente enthält, die proportional zur zweiten Potenz des Lenksignals ist.

7.  Lenksteuersystem nach einem der Ansprüche 1 bis 6, für ein Raupenfahrzeug, bei dem die linke und rechte Raupenlaufbahn durch einen Antriebsmotor (10) über einen Antriebsstrang und einen differentiellen Antriebsmechanismus (24, 28) angetrieben werden, **dadurch gekennzeichnet, daß** der Antriebsmechanismus die linke und die rechte Raupenlaufbahn bei Drehzahlen antreibt, die proportional zu der Größe eines Steuersignals sind.

8.  Lenksteuersystem nach einem der Ansprüche 1 bis 7, das ein Antriebsstrangdrehzahlsensor (76) vorgesehen ist, der an den Antriebsstrang gekoppelt ist, um ein Antriebstrangdrehzahlsignal zu erzeugen, das der Fahrgeschwindigkeit entspricht, und daß die Steuereinheit (70) das Steuersignal in Abhängigkeit des Produktes aus dem Lenksignal und dem Antriebsstrangdrehzahlsignal bildet.

9.  Lenksteuersystem nach einem der Ansprüche 1 bis 8, **gekennzeichnet durch** Mittel zum Vergleichen des Fahrzeuggeschwindigkeits- oder Antriebsstrangdrehzahlsignals mit einem Geschwindigkeits- oder Drehzahlschwellwert und **durch** Mittel zur Modifizierung des Steuersignals in Abhängigkeit davon, ob die Fahrgeschwindigkeit oder die Antriebsstrangdrehzahl größer oder nicht größer als der Schwellwert ist.

**10.** Lenksteuersystem nach Anspruch 9, **gekennzeichnet durch** Mittel, die dann, wenn die Fahrzeuggeschwindigkeit oder die Antriebsstrangdrehzahl nicht größer als der Schwellwert ist, einen theoretischen Fahrzeuggeschwindigkeitswert gleichsetzen mit der Fahrzeuggeschwindigkeit oder der Antriebsstrangdrehzahl, **durch** Mittel, die dann, wenn die Fahrzeuggeschwindigkeit oder die Antriebsstrangdrehzahl größer als der Schwellwert ist, den theoretischen Fahrzeuggeschwindigkeitwert veh_spd entsprechend folgender Gleichung berechnen:

$$veh\_spd = max\_veh\_spd + (whl\_spd - max\_veh\_spd)/K2,$$

wobei max_veh_spd ein vorwählbarer Parameter, whl_spd die Fahrgeschwindigkeit oder die Antriebsstrangdrehzahl und K2 eine vorwählbare Konstante ist, und **durch** Mittel zur Bestimmung des Steuersignals als Funktion aus veh_spd und der erfaßten Antriebsmotordrehzahl.

**11.** Lenksteuersystem nach einem der Ansprüche 1 bis 10, **dadurch gekennzeichnet, daß** das Lenksignal eine Position des Lenkelements (74) relativ zu einer mittleren Lage repräsentiert.

**12.** Lenksteuersystem nach einem der Ansprüche 2 bis 11, **gekennzeichnet durch** Mittel, die das Steuersignal proportional zu dem Produkt aus dem Lenksignal und dem Fahrzeuggeschwindigkeitssignal und umgekehrt proportional zu der Antriebsmotordrehzahlsignal bilden.

**13.** Lenksteuersystem nach einem der Ansprüche 1 bis 12, **dadurch gekennzeichnet, daß** der Fahrgeschwindigkeitssensor ein mit dem Antriebsstrang gekoppelter Drehzahlsensor ist.

**Claims**

**1.** A steering control system for a tracked vehicle, with a steering element (74) operable by an operator for a left and a right track, which are driven through a differential drive mechanism (24, 28) in dependence on a control signal, and with a steering sensor (72) coupled to the steering element (74) to generate a steering signal which represents the position of the steering element (74), **characterized by** a vehicle speed sensor (76) for directly detecting the vehicle speed and for generating a vehicle speed signal and by a control unit (70) for generating the control signal in dependence on the vehicle speed signal and the steering signal.

**2.** A steering control system according to claim 1, **characterized in that** a drive engine speed of rotation sensor (62) is provided to generate a drive engine speed signal of rotation and **in that** the generation of the control signal is also effected in dependence on the drive engine speed signal.

**3.** A steering control system according to claim 1 or 2, **characterized in that** the control unit (70) includes means which respond at a given position of the steering element (74) to generate control signals, so that a turning curve of the vehicle remains constant, insofar as the vehicle speed varies within a predeterminable range and the turning curve falls above a specific vehicle speed with increasing vehicle speed, where the turning curve is inversely proportional to a turning radius.

**4.** A steering control system according to claim 2 or 3, **characterized in that** the control unit includes means for calculating a turning speed value which is proportional to the vehicle speed multiplied by a ratio of the nominal speed of rotation of the drive engine divided by the detected drive engine speed of rotation, as well as means for calculating a control signal, which is proportional to a steering gain value multiplied by a ratio of the turning speed value divided by a predeterminable turning speed divisor value.

**5.** A steering control system according to any of claims 1 to 4, **characterized in that** means are provided to determine whether the vehicle is travelling forwards or in reverse and which generate a corresponding direction of travel signal, and **in that** the control device generates the control signal as a function of the steering signal, the vehicle speed signal, optionally the drive engine speed of rotation signal and the direction of travel signal.

**6.** A steering control system according to any of claims 1 to 5, **characterized in that** the control signal includes at least a component which is proportional to the second power of the steering signal.

**7.** A steering control system according to any of claims 1 to 6, for a tracked vehicle in which the left and right tracks are driven by a drive engine (10) through a drive train and a differential drive mechanism (24, 28), **characterized in that** the drive mechanism drives the left and the right tracks at speeds which are proportional to the magnitude of a control signal.

8. A steering control system according to any of claims 1 to 7, **characterized in that** a drive train speed of rotation sensor (76) is provided, coupled to the drive train, in order to generate a drive train speed of rotation signal which corresponds to the vehicle speed, and **in that** the control unit (70) forms the control signal in dependence on the product of the steering signal and the drive train speed of rotation signal.

9. A steering control system according to any of claims 1 to 8, **characterized by** means for comparing the vehicle speed or drive train speed of rotation signal with a speed or speed of rotation threshold value and by means for modifying the control signal in dependence on whether the vehicle speed or the drive train speed of rotation is greater than or not greater than the threshold value.

10. A steering control system according to claim 9, **characterized by** means which set a theoretical vehicle speed value equal to the vehicle speed or the drive train speed of rotation when the vehicle speed or the drive train speed of rotation is not greater than the threshold value, means which, when the vehicle speed or the drive train speed of rotation is greater than the threshold value, calculate the theoretical vehicle speed value veh_spd in accordance with the following equation:

$$veh\_spd = max\_veh\_spd + (whl\_spd - max\_veh\_spd)/K2$$

wherein max_veh_spd is a selectable parameter, whl_spd is the vehicle speed or the drive train speed of rotation and K2 is a selectable constant, and means for determining the control signal as a function of veh_spd and the detected drive engine speed of rotation.

11. A steering control system according to any of claims 1 to 10, **characterized in that** the steering signal represents a position of the steering element (74) relative to a central position.

12. A steering control system according to any of claims 2 to 11, **characterized by** means which form the control signal proportional to the product of the steering signal and the vehicle speed signal and inversely proportional to the drive engine speed of rotation signal.

13. A steering control system according to any of claims 1 to 12, **characterized in that** the vehicle speed sensor is a speed of rotation sensor coupled to the drive train.

**Revendications**

1. Système de commande de direction pour véhicule à chenilles comportant un organe de direction (74) pouvant être actionné par un opérateur pour une bande de chenille de gauche et une bande de chenille de droite, qui sont entraînées par un mécanisme d'entraînement différentiel (24,28) en fonction d'un signal de commande, et un capteur de braquage (72) couplé à l'organe de direction (74) pour produire un signal de braquage qui représente la position de l'organe de direction (74), **caractérisé par** un capteur (76) de la vitesse du véhicule servant à détecter directement la vitesse du véhicule et à produire un signal de vitesse du véhicule, et par une unité de commande (70) servant à produire le signal de commande en fonction du signal de vitesse du véhicule et du signal de braquage.

2. Système de commande de direction selon la revendication 1, **caractérisé en ce qu'**un capteur (62) de la vitesse de rotation du moteur d'entraînement est prévu pour la production d'un signal de vitesse de rotation du moteur d'entraînement et que la production du signal de commande s'effectue également en fonction du signal de la vitesse de rotation du moteur d'entraînement.

3. Système de commande de direction selon la revendication 1 ou 2, **caractérisé en ce que** l'unité de commande (70) contient des moyens qui répondent, pour une position donnée de l'organe de direction (74) pour produire des signaux de commande, de sorte qu'une courbe de braquage du véhicule reste constante dans la mesure où la vitesse du véhicule varie à l'intérieur d'une gamme pouvant être prédéterminée, et la courbe de braquage diminue au-dessus d'une certaine vitesse du véhicule lorsque la vitesse du véhicule augmente, la courbe de braquage étant inversement proportionnelle à un rayon de virage.

4. Système de commande de direction selon la revendication 2 ou 3, **caractérisé en ce que** l'unité de commande contient des moyens pour calculer une valeur de la vitesse de braquage, qui est proportionnelle à la vitesse du véhicule multipliée par un rapport de la vitesse de rotation nominale du moteur d'entraînement à la vitesse de rotation détectée du moteur d'entraînement, ainsi que des moyens pour calculer le signal de commande, qui est proportionnel à une valeur d'amplification de braquage multipliée par un rapport de la valeur de la vitesse de braquage par une valeur de préréglage de division de la vitesse de braquage.

5. Système de commande de braquage selon l'une des revendications 1 à 4, **caractérisé en ce qu'**il est prévu des moyens pour déterminer si le véhicule avance ou recule, qui produisent un signal correspondant de direction de déplacement et que le dispositif de commande produit le signal de commande en fonction du signal de braquage, du signal de vitesse de déplacement, éventuellement du signal de vitesse de rotation du moteur d'entraînement et du signal de direction de déplacement.

6. Système de commande de direction selon l'une des revendications 1 à 5, **caractérisé en ce que** le signal de commande contient au moins une composante, qui est proportionnelle à la puissance deux du signal de braquage.

7. Système de commande de direction selon l'une des revendications 1 à 6, pour un véhicule à chenilles, dans lequel les bandes des chenilles de gauche et de droite sont entraînées par un moteur d'entraînement (10) par l'intermédiaire d'une chaîne cinématique d'entraînement et d'un mécanisme d'entraînement différentiel (24,28), **caractérisé en ce que** le mécanisme d'entraînement entraîne la bande de chenille gauche et la bande de chenille de droite à des vitesses de rotation qui sont proportionnelles à l'amplitude d'un signal de commande.

8. Système de commande de direction selon l'une des revendications 1 à 7, dans lequel il est prévu un capteur (76) de la vitesse de rotation d'une chaîne cinématique d'entraînement, qui est couplé à la chaîne cinématique d'entraînement de manière à produire un signal de vitesse de rotation de la chaîne cinématique d'entraînement, qui correspond à la vitesse de déplacement et que l'unité de commande (70) forme le signal de commande en fonction du produit du signal de braquage par le signal de vitesse de rotation de la chaîne cinématique d'entraînement.

9. Système de commande de direction selon l'une des revendications 1 à 8, **caractérisé par** des moyens pour comparer le signal de vitesse du véhicule ou le signal de vitesse de rotation de la chaîne cinématique d'entraînement à une valeur de seuil de vitesse ou à une valeur de seuil de vitesse de rotation, et par des moyens pour modifier le signal de commande en fonction du fait que la vitesse de déplacement ou la vitesse de rotation de la chaîne cinématique d'entraînement est supérieure ou inférieure à la valeur de seuil.

10. Système de commande de direction selon la revendication 9, **caractérisé par** des moyens, qui, lorsque la vitesse du véhicule ou la vitesse de rotation de la chaîne cinématique d'entraînement n'est pas supérieure à la valeur de seuil, règlent une vitesse théorique du véhicule sur la vitesse du véhicule ou sur la vitesse de rotation de la chaîne cinématique d'entraînement, par des moyens qui, lorsque la vitesse du véhicule ou la vitesse de rotation de la chaîne cinématique d'entraînement est supérieure à la valeur de seuil, calculent la vitesse théorique du véhicule v_spd conformément à la relation suivante :

$$veh\_spd = max\_veh\_spd = (whl\_spd - max\_veh\_spd)/K2,$$

max_veh_spd étant un paramètre pouvant être présélectionné, whl_spd représentant la vitesse de déplacement ou la vitesse de rotation de la chaîne cinématique d'entraînement et K2 étant une constante pouvant être présélectionnée, et par des moyens pour déterminer le signal de commande en fonction de v_spd et de la vitesse de rotation détectée du moteur d'entraînement.

11. Système de commande de direction selon l'une des revendications 1 à 10, **caractérisé en ce que** le signal de direction représente une position de l'organe de direction (74) par rapport à une position moyenne.

12. Système de commande de direction selon l'une des revendications 2 à 11, **caractérisé par** des moyens qui forment le signal de commande proportionnellement au produit du signal de direction et du signal de vitesse du véhicule et d'une manière inversement proportionnelle au signal de vitesse de rotation du moteur d'entraînement.

**13.** Système de commande de direction selon l'une des revendications 1 à 12, **caractérisé en ce que** le capteur de vitesse de déplacement est un capteur de vitesse de rotation couplé à la chaîne cinématique d'entraînement.

Fig. 1

Fig. 2

```
                    ╭─────────────────────────────╮ ～300
                    ╰─────────────────────────────╯
                                  │
                                  ▼
                 ╱─────────────────────────────╱ ～302
                ╱                             ╱
               ╱─────────────────────────────╱
                                  │
                                  ▼
                        GEAR_CMD=        ～304
      JA           NEUTRAL  ODER
    ◄──────        PARKSTELLUNG
                             ?
                             │ NEIN
                             ▼
   308                   WHL_SPD      ～306
  WHL_SPD    JA          <1 KPH
  =1 KPH   ◄──────          ?
                             │ NEIN
                             ▼
                         WHL_SPD      ～310       312
                         > MAX.    NEIN      VEH_SPD=
                         SPEED   ──────►     WHL_SPD
                             ?
                             ▼
                  BERECHNE   VEH_SPD   ～314
                             │
                             ▼
                  BERECHNE   TURN_SPD  ～316
                             │
                             ▼
                  BERECHNE   GAIN_MOD  ～318
                             │
                             ▼
                  BERECHNE   STEER_GAIN ～320
                             │
                             ▼
                  BERECHNE   MOT_SPD   ～322
                             │
                             ▼
          ╭─────────────────────────────╮ ～324
          ╰─────────────────────────────╯
```

*Fig. 3*